# EUROPÄISCHE PATENTSCHRIFT

(11) **EP 1 752 228 B1**
(45) Veröffentlichungstag und Bekanntmachung des Hinweises auf die Patenterteilung: **24.11.2010**
(21) Anmeldenummer: 06118548.4
(22) Anmeldetag: 07.08.2006
(51) Int. Cl.: B07C 5/34, B07C 5/36, G01N 21/33

(54) **Verfahren und Vorrichtung zur Detektion und Sortierung von Glas**
Process and device for detection and sorting of glass
Procédé et dispositif de détection et de tri du verre

(30) Priorität: 08.08.2005 AT 53905 U
(43) Veröffentlichungstag der Anmeldung: 14.02.2007
(73) Patentinhaber: Binder & Co. Aktiengesellschaft, 8200 Gleisdorf (AT)
(72) Erfinder: Pansinger, Christian, 8052 Graz (AT); Huber, Reinhold, 8280 Fürstenfeld (AT)
(74) Vertreter: Henhapel, Bernhard

(56) Entgegenhaltungen:
- EP-A2- 0 820 819
- WO-A-2004/063729
- DE-C1- 4 339 822

## Beschreibung

Die Erfindung bezieht sich auf ein Verfahren zur Detektion und Sortierung von Glas innerhalb eines Altglasmaterialstroms, vorzugsweise aus Bruchglas, wobei von einer UV-Strahlungsquelle emittierte Lichtstrahlen auf dem Altglasmaterialstrom auftreffen und optische Eigenschaften des Altglasmaterialstroms mittels einer Detektiereinheit ermittelt und von einer damit in Datenverbindung stehenden Auswerte- und Steuereinheit verarbeitet werden und in Abhängigkeit davon die Auswerte- und Steuereinheit eine stromabwärts der Detektiereinheit angeordnete Entfernungsvorrichtung, beispielsweise Ausblasdüsen aktiviert, welche im Altglasmaterialstrom mitgeführte unerwünschte Materialien aus demselben ausscheidet und an einen vorbestimmten Ort ablenkt, wobei es sich bei den zu detektierenden, unerwünschten Materialien um Sonderglas, insbesondere Glaskeramik, Quarzglas, Bleiglas und temperatur- und hitzeschockbeständige technische Gläser wie Borosilikatgläser handelt, gemäß dem Oberbegriff des Anspruchs 1 sowie eine dieses Verfahren durchführende Vorrichtung gemäß dem Oberbegriff des Anspruchs 10.

Die Wiederverwertung von Alt- und Bruchglas mitsamt eines organisierten Sammel- und Ausleseverfahrens wird bereits seit geraumer Zeit erfolgreich praktiziert und konnte zu einer deutlichen Senkung des Energieaufwandes bei der industriellen Glasutensilienproduktion führen. Die bekannte Schwierigkeit, dass im Zuge einer Altglassammlung seitens der Konsumenten keine exakte Materialtrennung hinsichtlich Glasfarbe und artfremden Stoffen wie Keramik, Stein, Porzellan durchgeführt wird, konnte mittlerweile durch automatisierte Materialausleseverfahren mit optoelektronisch gesteuerten Sortiervorrichtungen zuverlässig bewältigt werden.

Zum Zwecke der Farbsortierung und Fremdstofferkennung werden zumeist berührungslose Messmethoden mittels Infrarot- oder RGB-Sensoren eingesetzt, welche anhand des registrierten Transmissions- oder Absorptionsgrades von auf den Altglasmaterialstrom gerichtetem Licht ein Ausscheiden der unerwünschten Fremdstoffe aus dem Altglasmaterialstrom bzw. ein Ablenken von farbigen Gläsern in dafür vorgesehene Fraktionen durch nachgeschaltete Ausblas- oder Saugdüsen einleiten.

Ein Problemkreis, der bisher beim Glas-Recycling nur von untergeordneter Bedeutung war, in letzter Zeit aber zunehmend an Brisanz gewinnt, ist jedoch die Erkennung von Sonderglas im Altglasmaterialstrom. Als Sondergläser werden eigens für spezielle Anwendungen kreierte Glassorten bezeichnet, die im Vergleich zu Normalglas (Kalknatron-Glas) stark abweichende chemische und physikalische Eigenschaften, insbesondere einen wesentlich höheren Schmelzpunkt sowie bessere thermische Eigenschaften aufweisen. Hierzu zählen etwa Glaskeramik, Quarzglas, Bleiglas sowie temperatur- und hitzeschockbeständige technische Gläser wie Borosilikatgläser.

Seitens der Industrie, aber auch seitens der Haushalte besteht die Nachfrage nach hitzebeständigem Glas, welches bessere thermische Eigenschaften aufweist, sowie hitzeschockbeständig ist. Während Normalglas schon bei etwa 1400°C chemische Reaktionen vollzieht und bei etwa 1500°C schmilzt, können manche Sondergläser in diesen Temperaturzonen ihre chemischen Strukturen noch annähernd aufrechterhalten und widerstehen einem Schmelzen. Glaskeramik und reines Quarzglas weisen sogar einen Schmelzpunkt von ca. 1800 bis 2000°C auf. Insbesondere technische Gläser wie Borosilikatgläaser, wie sie in der Elektrotechnik und Elektronik sowie in bei optischen Anwendungen Einsatz finden, erweisen sich als sehr hitze-, ausdehnungs- und hitzeschockresistent.

Der primäre Herstellungsprozess von Sonderglas gleicht demjenigen bei der Normalglaserzeugung, jedoch wird der Glasschmelze je nach Anwendungsgebiet ein gewisser Anteil an speziellen Oxiden beigefügt. Ein Borsilikatglas kann etwa 7-13% B₂O₃ und 2-7% Al₂O₃ als Additive enthalten. Entsprechend seinen gewünschten Eigenschaften werden bei der Glasherstellung entweder basische Oxide (z.B. Natrium-, Kalium-, Magnesium-, Calcium-, Barium- oder Zinkoxid) oder saure Oxide (z.B. Bortrioxid, Aluminiumtrioxid oder Diphosphorpentoxid) beigemengt, wobei als Färbemittel Metalle wie z.B. Kupfer, Chrom, Mangan und Eisen eingesetzt werden. Borsilikatgläser sind gegen chemische Substanzen und gegen Hitze und Temperaturschocks resistent und finden daher Einsatz in der chemischen Industrie, in Laboratorien, als Ampullen und Fläschchen in der pharmazeutischen Industrie, aber auch in Haushalten, so etwa als Kochgeschirr und als Glühlampenträger.

Die Erzeugung von Glaskeramik unterscheidet sich von der üblichen Glasherstellung durch einen nachgelagerten zusätzlichen Verfahrensschritt. Da es bei der normalen Glaserzeugung zu keiner Kristallisation des Glases kommt, werden der Glasschmelze zu diesem Zwecke keimbildende Stoffe, z.B. TiO oder ZrO₂ beigegeben, um bei einer erneuten Erwärmung eines Glasformkörpers eine Kristallisation des Gefüges zu erreichen. Somit liegen bei Glaskeramik ähnliche Materialeigenschaften wie bei Keramik vor. Da der Temperaturausdehnungskoeffizient von Glaskeramik gleich Null oder sogar negativ ist, ist dieses Material besonders für Beanspruchungsarten mit schnellen und hohen Temperaturwechseln geeignet und findet beispielsweise in Form von Keramik-Kochplatten allgemeinen Gebrauch in Haushalten.

Ein weiteres Problemfeld stellen die Bleigläser dar, welche zwar aufgrund ihrer starken Lichtbrechung und guten Oberflächenbearbeitbarkeit sehr beliebt sind, aus Umwelt- und Gesundheitsgründen jedoch unbedingt in speziellen Glashütten wiederaufbereitet werden müssen, wo sie unter kontrollierten Bedingungen wiedereingeschmolzen werden.

Gerade die geschilderten Resistenz-Eigenschaften von Sonderglas werden zwar im jeweiligen Einsatzgebiet hochgeschätzt, verursachen jedoch im Prozess einer Glas-Wiederverwertung beträchtliche Schwierigkeiten, da sie ein homogenes Verschmelzen mit dem Normalglas-Tiegel verhindern und solcherart zu Produktionsstörungen und Produktfehlern führen.

Um eine wirtschaftliche Online-Sortierung von Sonderglas zu ermöglichen, wurden bisher einige Versuche unternommen. Basierend auf bekannten Verfahren, die aus dem Sammelgut von Bruchglas die Fraktionen trennen und im wesentlichen auf optoelektronischen Systemen beruhen, die mittels Farberkennung im Bereich von sichtbarem Licht diese Fraktionen trennen. Dies geschieht dadurch, dass das auszusortierende Stückgut des gemischten Altglasmaterialstromes auf einem Sortierband oder während einer Freifallstrecke durch Strahlungsquellen bestrahlt und die durch den Altglasmaterialstrom hindurchgehende oder reflektierte Strahlung in ihrer Intensität von einer Detektiereinheit aufgenommen und mit Referenzwerten verglichen wird. Eine mit der Detektiereinheit in Datenverbindung stehende Auswerte- und Steuereinheit nimmt in der Folge eine Zuordnung des Stückgutes zu einer jeweiligen Fraktion vor und veranlasst ein Erfassen desselben durch Aufnehmer oder ein Ablenken in vorbestimmte Container mittels Druckluft- oder Saugdüsen.

Es existieren ansatzweise Verfahren, bei denen das Sonderglas im Wellenlängenbereich von sichtbarem Licht mittels Farbklassifikatoren, zumeist RGB-Sensoren, detektiert wird, wobei der Versuch einer Erkennung anhand von Schwellwerten, welche vorbekannten Farben von Sondergläsern entsprechen, unternommen wird. Da Sondergläser zumeist spezielle Farbtönungen wie etwa Violett oder Honig aufweisen, kann mit dieser Detektionsmethode zwar ein Teil der Sonderglasstücke erkannt werden, eine zuverlässige Erfassung von Sonderglas ist damit jedoch noch nicht verbunden. Da für die Färbung von Sonderglas keine einheitlichen Richtlinien existieren, werden auch Sondergläser in herkömmlichen, unscheinbaren Farben wie etwa Weiß und Braun hergestellt und können insofern nicht erkannt werden. Insbesondere die Unterscheidung von Gläsern mit brauner Farbtönung kann nicht zuverlässig gewährleistet werden, wodurch ein hoher Glasverlust durch Fehlsortierung zu verzeichnen ist. Die Generierung einer entsprechenden Trennschärfe ist hier nur bedingt realisierbar, da die Detektion mit einem Vergleich von Farb-Intensitätswerten im sichtbaren und Infrarot-Bereich unter anderem von der Dicke und Form des Glases abhängig ist.

Andere bekannte Verfahren zur Sortierung von Sonderglas arbeiten mit Röntgensensoren, wobei bestimmte chemische Bestandteile (z.B. Aluminiumoxid) im Sonderglas mit einer Röntgenstrahlquelle erregt werden. Als Reaktion geben die erregten Elementarteilchen bzw. Elektronen Energie in Form von Licht ab, dessen Intensität schließlich gemessen und zum Zwecke der Detektion ausgewertet wird. Der industrielle Markt begegnet den Röntgensensorverfahren jedoch mit Vorbehalt, da der Einsatz von Röntgenstrahlen aufgrund der extrem kurzwelligen Strahlung stets ein gewisses Gesundheitsrisiko für im Umkreis der Anlage involvierte Personen mit sich bringt. Darüber hinaus weisen Anlagen, welche nach diesem Verfahren arbeiten, eine relativ groß dimensionierte Bauweise auf und sind durchwegs kostspielig. Auch hier ist eine vollkommene Erfassung von Sondergläsern, insbesondere einiger Borosilikatgäser, nicht gewährleistet.

Die DE 43 39 822 C1 offenbart ein Verfahren sowie eine Vorrichtung zur Sortierung anorganischer, nichtmetallischer Werkstoffe. Zur Gehaltsbestimmung von Glasinhaltsstoffen z.B. von Ba/Sr/Pb-Gläsern wird eine optische Analyse unter Heranziehung von Reflexionsspektren im nahen UV-Bereich vorgenommen. Hierbei werden unterschiedliche UV-Anregungsbanden zwischen 300 und 600nm eingesetzt, welche jeweils als Maß für die von BaO, SrO und PbO verursachte Absorption dienen und einen Rückschluss auf die Konzentration dieser Additive im Glasbruch zulassen. Das Analyseverfahren gemäß der DE 43 39 822 C1 erfordert eine Ausrichtung der Glasbruchstücke auf der Fördereinrichtung, sodass jene mit ihrer Bruchfläche zum optischen System weisen.

Ein weiteres bekanntes Verfahren zur Sortierung von Sonderglas arbeitet mit der Eigenschaft der Fluoreszenz von Sonderglas. Hierbei wird Glas mit UV-Licht einer bestimmten Wellenlänge bestrahlt, worauf es in einem engen, sichtbaren Spektralbereich zu fluoreszieren beginnt, da das eingestrahlte Licht von im oxidischen Glas vorhandenen Verunreinigungen teilweise absorbiert und in Fluoreszenzstrahlung konvertiert wird. Anhand der Fluoreszenzfarbe können dann Rückschlüsse auf die Art des Sonderglases gezogen werden. Ein solches Verfahren ist beispielsweise aus der DE 43 39 822 C1 bekannt. Als nachteilig dabei erweist sich dabei jedoch, dass die Bestrahlung des Altglasmaterialstroms mit UV Licht erfolgt, dass abhängig ist von der Art des auszusortierenden Sonderglases. Mit anderen Worten bedeutet dies, dass schon vor der Sortierung bekannt sein muss, welches Sonderglas sich im Altglasmaterialstrom befindet, um die Bestrahlung mit UV Licht korrekter Wellenlänge vornehmen zu können.

Ein weiterer Nachteil ist auch der Umstand, dass der beschriebene Fluoreszenzeffekt typisch für Verunreinigungen im Sonderglas ist und nicht für die Glassorte selbst. So treten ungewollte Verunreinigungen oder Mikroeinschlüsse von Ofen- bzw. Tiegelmaterial bereits bei der Produktion von Gläsern auf, wodurch das Fluoreszenzverhalten schwer einschätzbar gemacht wird. Insofern besteht die Schwierigkeit, dass völlig unterschiedliche Sonderglassorten ein vergleichbares Fluoreszenzspektrum aufweisen können und gleiche Sonderglassorten unterschiedliche Fluoreszenzspektren. Ein weiterer Nachteil dieses Verfahrens ist der Umstand, dass aufgrund der geringen Konzentration von Verunreinigungen eine sehr starke Lichtquelle zu deren Anregung eingesetzt werden muss. Dies bedingt einen hohen Energieaufwand und macht auf der Detektorseite die Vorsehung eines Kantenfilters zum Schutz der Detektiereinheit notwendig.

Der vorliegenden Erfindung liegt daher die Aufgabe zugrunde, diese Nachteile zu vermeiden, und ein Verfahren zur Detektion und Sortierung von Sonderglas zu schaffen, durch welche eine zuverlässige und wirtschaftliche Erkennung von Sondergläsern wie Glaskeramik, Bleiglas und temperatur- und hitzeschockbeständige technische Gläser wie Borosilikatgläser gewährleistet wird. Die Detektion und Ausscheidung dieser Sondergläser aus dem Altglasmaterialstrom soll unabhängig von der Eigenfarbe und der Schichtdicke der im Altglasmaterialstrom mitgeführten Glasteile erfolgen und darüber hinaus eine sicherheitstechnische oder gesundheitliche Gefährdung von im Umkreis der Sortieranlage arbeitenden Personen ausschließen.

Diese Aufgabe wird durch ein Verfahren mit den kennzeichnenden Merkmalen des Anspruchs 1 gelöst. Bei einem solchen Verfahren treffen innerhalb eines Altglasmaterialstroms, bei welchem es sich vorzugsweise um Bruch- bzw. Altglas handelt, über eine UV-Strahlungsquelle emittierte Lichtstrahlen auf dem Altglasmaterialstrom auf, wobei optische Eigenschaften des Altglasmaterialstroms mittels einer Detektiereinheit ermittelt und in ihrer Eigenschaft von einer damit in Datenverbindung stehenden Auswerte- und Steuereinheit verarbeitet werden. In Abhängigkeit dieser Auswertung aktiviert die Auswerte- und Steuereinheit eine stromabwärts der Detektiereinheit angeordnete Entfernungsvorrichtung, beispielsweise Ausblasdüsen , welche im Altglasmaterialstrom mitgeführte unerwünschte Materialien aus demselben ausscheidet und an einen vorbestimmten Ort ablenkt, wobei es sich bei den zu detektierenden, unerwünschten Materialien um Sonderglas, insbesondere Glaskeramik, Quarzglas, Bleiglas und temperatur- und hitzeschockbeständige technische Gläser wie Borosilikatgläser handelt.

Dabei ist es erfindungsgemäß vorgesehen, dass die emittierten Lichtstrahlen durch den Altglasmaterialstrom hindurch auf der Detektiereinheit auftreffen und die Detektion des Sonderglases aufgrund eines Vergleiches der UV-Transmissionswerte des Altglasmaterialstroms mit zuvor aus standardisierten Materialuntersuchungen im Labor erhaltenen UV-Transmissionswerten erfolgt, wobei zum Vergleich der UV-Transmissionswerte derjenige Wellenlängenbereich herangezogen wird, bei dem es zur Absorption des emittierten Lichtes kommt. Im Zuge des Vergleiches werden die aus dem aktuell von der Detektiereinheit erfassten Altglasmaterialstrom ermittelten UV-Absorptionskanten ("Cutoff"-Frequenzen) verarbeitet und mit Referenzwerten verglichen, wobei unter UV-Absorptionskanten in diesem Zusammenhang jener Bereich der Transmissionswerte verstanden wird, bei welchem mit abnehmender Wellenlänge keine zunehmende Transmission mehr auftritt.

Überraschenderweise hat sich herausgestellt, dass Sondergläser wie Glaskeramik, Bleiglas oder temperatur- und hitzeschockbeständige technische Gläser wie Borosilikatgläser aufgrund deren charakteristischen Zusammensetzung und Menge von Additiven eine eindeutige materialspezifische Absorption bzw. Transmission von auftreffendem UV-Licht aufweisen, wodurch eine zuverlässige Detektion und Sortierung dieser Sondergläser erfolgen kann.

Gemäß den kennzeichnenden Merkmalen des Anspruchs 2 ist vorgesehen, dass das von der Strahlungsquelle emittierte Licht den gesamten UV Wellenlängenbereich abdeckt. Dadurch ist es nicht erforderlich, bereits vor der Sortierung zu wissen, welche Art von Sonderglas im Altglasmaterialstrom enthalten ist und aussortiert werden soll.

In einer bevorzugten Ausführungsvariante der Erfindung gemäß den kennzeichnenden Merkmalen des Anspruchs 3 erfolgt der Vergleich der von der Detektiereinheit detektierten UV-Transmissionswerte des Altglasmaterialstroms nicht über den gesamten Wellenlängebereich des UV-Spektrums sondern lediglich für ausgewählte Wellenlängenbereiche. Diese ausgewählten Wellenlängebereiche werden dabei anhand von vor der Sortierung an Probestücken ermittelten Transmissionswerten bestimmt.

Erfolgt die Auswertung der UV-Transmissionswerte gemäß den kennzeichnenden Merkmalen des Anspruchs 4 über den gesamten Wellenlängenbereich des UV-Spektrums, kann eine Sortierung zwar ebenfalls mit verlässlicher Genauigkeit vorgenommen werden, allerdings bewirkt diese Auswertemethode ein erhöhtes Datenvolumen, das zu verarbeiten ist.

Zufolge der kennzeichnenden Merkmale des Anspruchs 5 sind zur Erfassung der UV-Transmissionswerte mehrere Messpunkte über das gesamte UV-Spektrum bzw. über eine Auswahl mehrerer definierter Wellenlängenbereiche verteilt vorgesehen, wobei die Messpunkte stets in regelmäßigen Abständen zueinander angeordnet sind. So können beispielsweise Messpunkte im Abstand von 30 nm vorgesehen sein. Durch eine anwendungsspezifische Verteilung der Messpunkte soll kann eine vollständige Erfassung aller möglicherweise auftretenden Materialien bzw. Sondergläser gewährleistet werden.

Vorzugsweise wird diejenige Wellenlänge, bei welcher eine vollkommene Absorption des von der UV-Strahlungsquelle emittierten Lichtes ("UV-Cutoff"-Frequenz) erfolgt bzw. der Wellenlängenbereich einer annähernd vollkommenen Absorption ermittelt, um auf die Materialbeschaffenheit bzw. auf das Vorliegen eines Sonderglases rückschließen zu können. Diesbezüglich wird gemäß den kennzeichnenden Merkmalen des Anspruchs 6 im Zuge des Vergleichs der UV-Transmissionswerte mit zuvor aus standardisierten Materialuntersuchungen im Labor erhaltenen UV-Transmissionswerten derjenige Bereich der UV-Absorptionskante herangezogen, in welchem die Durchlässigkeit des Stückguts des Altglasmaterialstroms 0 bis 50 % beträgt. Diejenigen Wellenlängen, bei welchen die Durchlässigkeit des Stückguts des Altglasmaterialstroms annähernd gegen Null geht, werden für das erfindungsgemäße Verfahren naturgemäß eine hohe Aussagekraft haben.

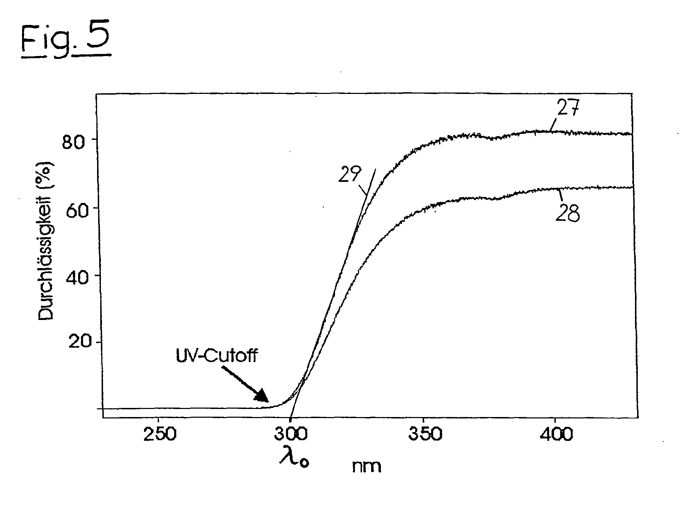

Die Klassifikation des Altglasmaterialstroms erfolgt dabei anhand eines Vergleiches der aktuell ermittelten "UV-Cutoff"-Frequenzen mit zuvor in Laborversuchen ermittelten und in der Detektiereinheit bzw. in der Auswerte- und Steuereinheit abgespeicherten materialspezifischen Referenz-"UV-Cutoff"-Frequenzen (siehe auch Darstellung der "UV-Cutoff"-Frequenz in Fig.5). Im Altglasmaterialstrom mitgeführte Sonderglasstücke können anhand dieses Kennwertes eindeutig und in Unabhängigkeit ihrer Farbtönung und Schichtdicke erkannt werden.

Gemäß den kennzeichnenden Merkmalen des Anspruchs 7 wird zum Vergleich der materialspezifischen Durchlässigkeit bzw. der UV-Transmissionswerte die Tangente der UV-Absorptionskanten ermittelt und deren Steigung mit abgespeicherten Referenzsteigungen verglichen. Anhand einer Vielzahl von Messpunkten wird eine Transmissions- bzw. Absorptionskennlinie entlang einer Wellenlängen-Skala erstellt und deren Charakteristik mit der Charakteristik abgespeicherter Referenzkennlinien verglichen. Es liegt an den individuell ausgestalteten Auswertungsalgorithmen und am jeweiligen Einsatzgebiet des Verfahrens, welche Charakteristiken der Transmissionskennlinie zu einer eindeutigen Klassifizierung des Altglasmaterialstroms herangezogen wird. Beispielsweise kann die Steigung von beliebigen an die UV-Absorptionskanten gelegten Tangenten ermittelt und mit abgespeicherten Referenzsteigungen verglichen werden.

Zufolge der kennzeichnenden Merkmale des Anspruchs 8 wird zur Generierung eines materialspezifischen Kennwertes vorgeschlagen, eine Tangente an die UV-Absorptionskante der Kennlinie zu legen, deren Schnittpunkt mit der Abszisse des Diagramms, also der Wellenlängen-Skala, rechnerisch zu ermitteln und als Vergleich der Durchlässigkeit gegenüber UV-Licht heranzuziehen.

Gemäß den kennzeichnenden Merkmalen des Anspruchs 9 ist es vorgesehen, dass der Altglasmaterialstrom zusätzlich mit sichtbarem Licht bestrahlt wird und die Detektion des Sonderglases aufgrund eines Vergleiches der von der Detektiereinheit detektierten Transmissionswerte des sichtbaren Lichtes des Altglasmaterialstroms mit zuvor aus standardisierten Materialuntersuchungen erhaltenen Transmissionswerten des sichtbaren Lichtes erfolgt. Wie sich überraschender Weise herausgestellt hat, weisen einige der Sondergläser ein charakteristisches Absorptions- bzw. Transmissionsverhalten auch im sichtbaren Bereich des Lichtes auf, das auf diese Art und Weise zur Klassifizierung ebenfalls genutzt werden kann.

Anspruch 10 richtet sich auf eine Vorrichtung, welche nach einem Verfahren gemäß einem der Ansprüche 1 bis 9 arbeitet.

Bei einer solchen Vorrichtung kann es unter Umständen wünschenswert sein, die im Altglasmaterialstrom detektierten Sonderglassorten in mehrere Gruppen zu separieren, für welche jeweils eigene Ablageorte vorgesehen sind. Es besteht daher die Möglichkeit, dass mittels der von der Auswerte- und Steuereinheit aktivierten Entfernungsvorrichtung eine Ablenkung und Sortierung detektierter Sondergläser in mehreren Fraktionen erfolgt. Eine erfindungsgemäße Sortierung von Sonderglas kann selbstverständlich auch im Zusammenhang mit der Sortierung von Materialströmen wie etwa allgemeinem Müll, Kunststoff oder KSP (Keramik, Stein und Porzellan) gemäß vorbekannten Sortierverfahren Einsatz finden.

Die Erfindung wird nun anhand eines Ausführungsbeispiels näher erläutert. Dabei zeigt:
- Fig.1: eine schematische Darstellung einer Anlage entsprechend einem erfindungsgemäßen Verfahren
- Fig.2: eine schematische Darstellung des Aufbaus eines Spektrographen
- Fig.3: eine Darstellung von Transmissionskennlinien dreier Materialproben im UV/Vis-Bereich
- Fig.4: eine Darstellung von Transmissionskennlinien einer Vielzahl von Materialproben im UV-Bereich
- Fig.5: eine Detaildarstellung der "UV-Cutoff"-Frequenz von Transmissionskennlinien

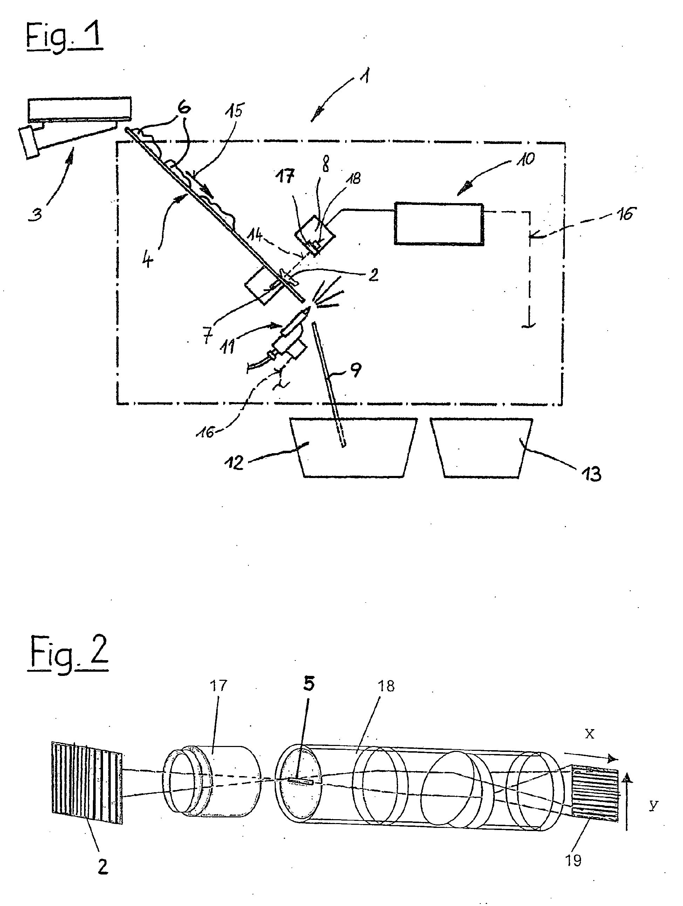

In Fig.1 ist eine Anlage mit einem Rutschensortierer 1 entsprechend einem erfindungsgemäßen Verfahren zur Detektion von Sonderglas dargestellt, welcher eine Aufgabe-Rinne 3, eine Materialrutsche 4, eine erfindungsgemäße UV-Strahlungsquelle 7, eine Detektiereinheit 8 samt Auswerte- und Steuereinheit 10 und mittels einer Ventilsteuerung 16 ansteuerbaren Ausblasdüsen 11, sowie mindestens zwei Container 12 und 13 umfasst. Ein vorwiegend aus Bruchglas bestehender Altglasmaterialstrom 6 wird von der Aufgabe-Rinne 3 automatisiert über die Materialrutsche 4 in Bewegungsrichtung 15 in den Erfassungsbereich der Detektiereinheit 8 geführt. Beispielhaft ist ein einzelnes Bruchglas-Stückgut 2 dargestellt, welches sich gerade in diesem Erfassungsbereich befindet. Je nach Klassifikation durch die unten näher beschriebene Auswerte- und Steuereinheit 10 wird das Bruchglas-Stückgut 2 entweder über eine Freifallstrecke, seinem natürlichen Fallweg folgend im Container 12 der Gut-Fraktion landen oder aber mittels der Ausblasdüsen 11 während des freien Falls abgelenkt und im Container 13 der Schlechtfraktion landen. Zur genaueren Führung des Altglasmaterialstroms in die Container 12, 13 sind Ablenkbleche 9 vorgesehen. Alternativ dazu kann anstelle des gezielten Ausblasens von frei fallendem Bruchglas-Stückgut 2 auch ein Ausblasen des Bruchglas-Stückgutes 2 während dessen Transport auf einem Gliederband vorgesehen sein. Beim Gliederband handelt es sich in diesem Zusammenhang um ein Transportband mit entsprechenden Öffnungen, welche ein zielgerichtetes Anblasen und Ausscheiden des Bruchglas-Stückgutes 2 mittels der Ausblasdüsen 11 ermöglichen. Das Ausblasen des Bruchglas-Stückgutes 2 kann unter einem beliebigen Winkel zu diesem bzw. zum Transportband erfolgen.

Das Ausscheiden der im Altglasmaterialstrom 6 mitgeführten unerwünschten Sonderglasstücke findet zufolge eines erfindungsgemäßen Vergleichs der erfassten UV-Transmissionswerte mit abgespeicherten Referenzwerten statt, wobei die mit der Detektiereinheit 8 verbundene Auswerte- und Steuereinheit 10, eine oder mehrere stromabwärts der Detektiereinheit 8 angeordnete Ausblasdüsen 11 aktiviert. Anstelle der Ausblasdüsen 11 ist auch eine andere äquivalente Entfernungsvorrichtung 11 wie etwa eine Saugvorrichtung, mittels derer eine Ausscheidung von unerwünschten Materialien aus dem Altglasmaterialstrom 6 erfolgen kann, einsetzbar.

In einer bevorzugten Ausführungsform sind die Ausblasdüsen 11 bzw. andere Entfernungsvorrichtungen 11 stromabwärts der Detektiereinheit 8 in mehreren, separat ansteuerbaren Gruppen angeordnet, um eine Ablenkung des Sonderglases aus dem Altglasmaterialstrom 6 in mehrere vorbestimmte Container und damit eine Sortierung des Altglasmaterialstroms 6 in mehrere artgleiche Fraktionen durchzuführen. In solchem Falle kann das System Container mit drei oder mehr Materialfraktionen aufweisen.

Die Darstellung der Anlage gemäß Fig.1 ist lediglich exemplarisch gewählt und kann in ihrer realen Ausgestaltung, insbesondere in der Anordnung der Ausblasdüsen 11 und der Container 12 und 13 mannigfaltig variieren. Weiters können die Fördermittel zum Transport des Altglasmaterialstroms 6 anstatt in Form der Materialrutsche 4 auch in Form eines horizontalen Bandförderers mit Gliederbändern oder in anderer Weise ausgeführt sein.

Zur praktischen Umsetzung des Messverfahrens wird als Detektiereinheit 8 bevorzugterweise ein ortsauflösendes Spektrometersystem mit einem bildgebenden UV-Spektrographen 18 eingesetzt. Dieses als "Spectral Imaging" bezeichnete Spektrometersystem besteht gemäß Fig.2 im wesentlichen aus einem Objektiv 17, einem bildgebenden UV-Spektrographen 18 und einem Matrixdedektor 19 (z.B. eine CCD-Kamera). Beim Einsatz herkömmlicher, nicht-ortsauflösender Spektrometer muss der Messkopf über dem Objekt verfahren werden oder das Objekt unter dem Messkopf in verschiedene Richtungen bewegt werden, um dennoch örtlich differenzierte Spektralinformation zu erhalten. Im Gegensatz hierzu handelt es sich bei ortsauflösenden Spektrometersystemen um Messgeräte, die eine gleichzeitige Aufnahme von spektraler und örtlicher Information einer Objektoberfläche erlauben.

Der Erfassungsbereich des Spektrographen 18 ist vorzugsweise zeilen- bzw. streifenförmig. Dies wird in bekannter Weise durch geeignete Anordnung von Objektiven 17 erreicht, die die vom Altglasmaterialstrom 6 emittierte Strahlung auf den Eingangsschlitz 5 des Spektrographen 18 abbilden. Die Länge des abgebildeten Streifens kann hierbei von wenigen Millimetern bis zu mehreren Metern variieren, indem entweder kommerziell erhältliche Mikroskopobjektive oder übliche Kameraobjektive verwendet werden. Die räumliche Auflösung variiert entsprechend von Mikrometern bei Messungen im Millimeterbereich bis zu mehreren Millimetern bei Messungen im Meterbereich. Typischerweise wird das spektrale Bild von einer monochromen CCD-Kamera als Matrixdedektor 19 aufgenommen. Hierbei wird in einer ersten Dimension die durch den Eingangsschlitz 5 definierte Ortsinformation, also die Positionsinformation innerhalb eines bestimmten Streifens, abgebildet und in einer zweiten Dimension der zu untersuchende Wellenlängenbereich. Die ortsabhängigen Intensitäten bzw. Durchlässigkeiten für unterschiedliche Wellenlängen können somit als dreidimensionales Bild dargestellt werden. Jeder Bildpunkt entspricht einem bestimmten Ort auf dem abgebildeten Streifen eines analysierten Stückgutes 2 und einer Intensität bzw. Durchlässigkeit bei einer bestimmten Wellenlänge. Üblicherweise wird die räumliche Achse in x-Richtung und die spektrale Achse in y-Richtung des Matrixdedektor 19 gelegt. Die örtliche Auflösung wird dann durch die Anzahl der Bildpunkte in x-Richtung bestimmt, während die Anzahl der Wellenlängenbanden durch die Anzahl der Bildpunkte in y-Richtung bestimmt wird. Darüber hinaus bleibt die Notwendigkeit bestehen, das Messobjekt relativ zum streifenförmigen Erfassungsbereich zu bewegen, um eine Fläche aufzunehmen.

Mittels des Matrixdetektors 19, in der Regel einer CCD-Kamera, kann entweder der gesamte UV- Wellenlängenbereich oder lediglich ein ausgewählter Bereich davon erfasst werden.

Falls sich die Materialdetektion nicht nur auf Sonderglas beschränkt, sondern im System noch andere Sortierfraktionen wie etwa für Porzellan oder Kunststoff vorgesehen sind, kann es mitunter notwendig sein, neben dem UV-Spektrographen 18 noch andere Spektrographen einzusetzen, um gegebenenfalls auch den Wellenlängenbereich von sichtbarem Licht und InfrarotLicht abzudecken. Das Vorhandensein von Keramik, Porzellan und Stein im Altglasmaterialstrom 6 ist selbstverständlich auch über die erfindungsgemäß vorgeschlagene Messung im UV-Bereich zu detektieren, da solche Materialien naturgemäß 0% Lichtdurchlässigkeit bzw. eine horizontale Basislinie 23 bzw. 26 aufweisen.

Die Umwandlung von Analog- in Digitaldaten kann mithilfe von herkömmlichen PC-Frame-Grabber-Karten mit 8-bit-Digitalisierung vorgenommen werden, wobei es sich aber bei anspruchsvolleren Sortieraufgaben als vorteilhaft erweist, Auflösungen von 12 bis 16 bit zu verwenden. Alternativ dazu kann auch eine Umwandlung des Analog-Messsignals in ein digitales Signal erfolgen, wobei mitunter auf PC-Frame-Grabber-Karten auch verzichtet werden kann.

Erfindungsgemäß ist es vorgesehen, einen Vergleich von vorzugsweise mittels "Spectral Imaging" ermittelten UV-Transmissionswerten des Altglasmaterialstroms 6 mit zuvor aus standardisierten Materialuntersuchungen erhaltenen UV-Transmissionswerten vorzunehmen. Hierzu können sowohl singulare Transmissionswerte entsprechend verschiedenen Wellenlängen-Messpunkten herangezogen werden, als auch entsprechende materialspezifische Transmissionskennlinien über den gesamten UV-Bereich oder einen Teil des UV-Bereichs generiert werden, wobei ausgewählte Bereiche dieser Kennlinien verglichen werden, insbesondere wird ein Vergleich der sogenannten UV-Absorptionskanten vorgenommen.

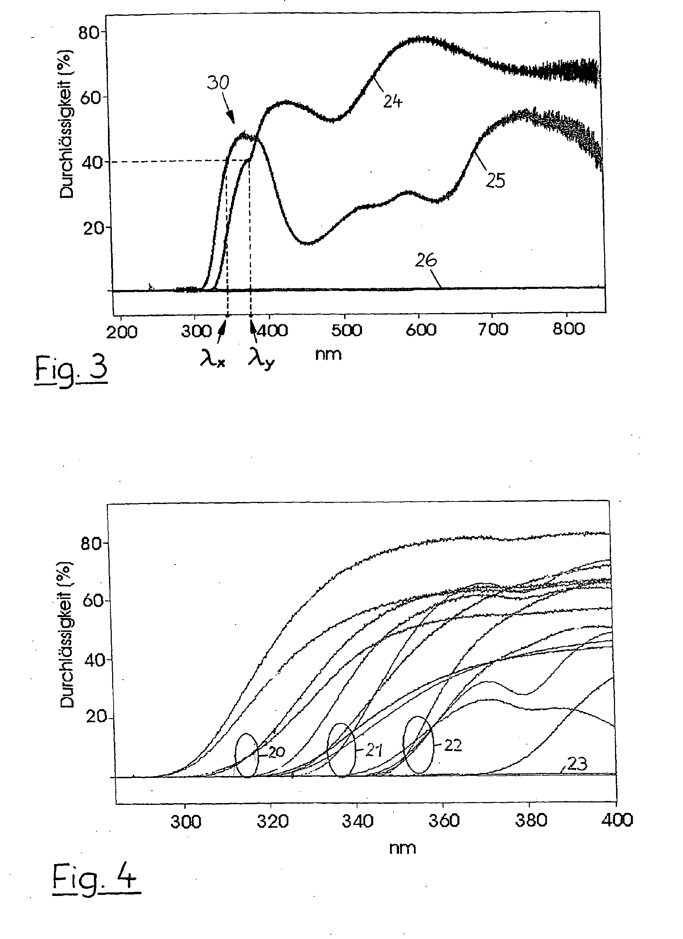

Als Absorptionskante wird in der Spektroskopie der Verlauf einer Transmissionskennlinie in jenem Wellenlängenbereich bezeichnet, in dem auf das Material einstrahlendes Licht zunehmend und schließlich vollkommen absorbiert wird, also jener Bereich der Absorptionskennlinie, bei welchem mit abnehmender Wellenlänge keine zunehmende Transmission bzw. keine abnehmende Absorption mehr auftritt. Je nach Materialzusammensetzung bzw. im Anwendungsfalle von Glas je nach beigemengten chemischen Additiven weist die Transmissionskennlinie eine mehr oder weniger steile Absorptionskante auf, wobei die Absorptionskante materialspezifisch an unterschiedlichen Stellen der Wellenlängen-Skala in den Bereich vollkommener Undurchlässigkeit abfällt. Derartige Transmissionskennlinien sind in den Figuren 3 und 4 dargestellt, wobei beispielsweise die Absorptionskante der Kennlinie von Probe 25 als jener Abschnitt nachzuverfolgen ist, in welchem die Durchlässigkeit ab dem durch Pfeil 30 gekennzeichneten Bereich signifikant und rapide gegen Null abfällt.

Fig.3 zeigt die Transmissionskennlinien 24, 25, 26 von drei unterschiedlichen Glassorten, wobei es sich bei einer dieser Proben um undurchsichtige Glaskeramik mit einer demzufolge horizontalen, parallel zur Abszisse verlaufenden Kennlinie 26 handelt. Wie die Verläufe dieser Transmissionskennlinien zeigen, ist ihre Aussagekraft in einem Wellenlängenbereich außerhalb des UV-Bereiches (ab ca.380 nm) eher gering. Die Beurteilung der Materialgüte anhand der Durchlässigkeit im Bereich des sichtbaren Lichtes ist zur Detektion von Sonderglas also kaum geeignet.

Hingegen lassen die in einer Testmessung ermittelten Transmissionskennlinien einer Vielzahl von Glasproben im UV-Bereich < 380 nm gemäß Fig.4 bereits eine sehr deutliche Klassifizierung nach Glassorten zu. Bemerkenswert ist, dass diese Klassifizierung, welche in der Darstellung durch Kreise 20, 21, 22 hervorgehoben wurde, nun völlig unabhängig von der Eigenfarbe und Schichtdicke des Glases ist. Undurchsichtige Proben 23 wie etwa Keramik, Stein und Porzellan heben sich wiederum nicht von der Basislinie ab und sind von der Auswerte- und Steuereinheit 10 als solche zu erkennen.

Eine rechnergestützte Analyse der Transmissionskennlinien kann anhand verschiedener Verfahren erfolgen. Obwohl prinzipiell sämtliche Transmissionskennwerte zur Analyse herangezogen werden können, hat sich gezeigt, dass es vor allem UV-Transmissionswerte in einem Bereich von 0 bis 50% sind, welche zur Detektion und Sortierung besonders gut geeignet sind. Beispielsweise entspricht der Kennwert λₓ in Fig.3 jener Wellenlänge, bei welcher bei Probe 24 noch 40% Transmission gemessen wird. Demgegenüber weist Probe 25 beim selben Transmissionsgrad eine Wellenlänge von λ_{y} auf. Anhand diesen Daten ist es beispielsweise bereits möglich, eine Einordnung des Glases vorzunehmen, welches für dieses Messergebnis verantwortlich ist.

Insbesondere die Wellenlänge der vollkommenen Absorption ("Cutoff- Frequenz") bzw. der Übergangswellenlängenbereich zur vollkommenen Absorption eignet sich besonders gut für eine Klassifikation des Altglasmaterialstroms 6 und einer Detektion von darin mitgeführten Sonderglasstücken (siehe Fig.5).

Als besonders vorteilhaft hat sich dabei ein Verfahren herausgestellt, welches zum Vergleich dieser detektierten Übergangswellenlängenbereiche mit Referenzübergangswellenlängenbereichen eine Tangente der UV-Absorptionskanten ermittelt und deren Steigung mit abgespeicherten Referenzsteigungen vergleicht. Die Tangente kann dabei an die gesamte UV-Absorptionskante gelegt werden, also an jenen Bereich der Kennlinie, ab welcher mit abnehmender Wellenlänge keine zunehmende Transmission bzw. keine abnehmende Absorption mehr auftritt oder aber an jenen Bereich der Absorptionskante, bei welchem die Durchlässigkeit zwischen 0% und 50% liegt.

Dabei kann der Schnittpunkt λ₀ der Tangente an die UV-Absorptionskante mit der Abszisse rechnerisch ermittelt und als Kennwert zum Vergleich der UV-Transmissionswerte herangezogen wird. Die in Fig.5 dargestellte Tangente 29, welche an die UV-Absorptionskante der Kennlinie von Probe 27 gelegt wurde, schneidet die Abszisse beispielsweise bei einem Wert λ₀ von 300 nm.

Bei den Proben 27, 28 handelt es sich um unterschiedliche Bruchstücke desselben Glases. Es ist ersichtlich, dass der Transmissionswert aufgrund der unterschiedlichen Probengeometrie (Schichtdicke, Form) über den Verlauf der Kennlinie variiert, jedoch beide Proben exakt dieselbe UV-Absorptionskante zeigen, die Durchlässigkeit also bei derselben Wellenlänge verschwindet. Würde man an die beiden Absorptionskanten imaginäre Tangenten legen, resultierten aus deren Schnittpunkten mit der Abszisse wiederum Kennwerte λ₀, welche ebenso annähernd bei derselben Wellenlänge lägen.

Es versteht sich, dass die Tangente an beliebige Punkte der Kennlinie, beispielsweise mit definierten Durchlässigkeitswerten, gelegt werden kann, um jeweils unterschiedliche charakteristische Kennwerte λ₀ bzw. Steigungen der Tangente zu erhalten, welche zur Materialanalyse verwertet werden.

Zu diesem Zwecke sind mehrere Messpunkte der LichtTransmission über einen definierten UV-Wellenlängenbereich verteilt vorgesehen. Die Messpunkte sind zweckmäßigerweise innerhalb des definierten Wellenlängenbereichs oder über den gesamten UV-Wellenlängenbereich in regelmäßigen Abständen (z.B. 30 nm) zueinander angeordnet, können jedoch auch in einer Auswahl von beliebigen Abstands-Intervallen angeordnet sein. Je nach Einsatzgebiet kann es unter Umständen möglich sein, das Augenmerk der Detektion lediglich auf einen bestimmten, eingeschränkten Wellenlängenbereich zu lenken und andere Wellenlängenbereiche unberücksichtigt zu lassen. Auf diese Weise wird eine Ökonomisierung des Datenaufkommens erreicht, da lediglich ausgewählte Wellenlängenbereiche zur Ansteuerung der nachfolgenden als Ausblasdüsen ausgebildeten Entfernungsvorrichtung 11 herangezogen werden.

Obwohl eine Beurteilung des Altglasmaterialstroms 6 anhand der materialspezifischen "UV-Cutoff"-Frequenzen markant und vorteilhaft ist, lassen sich auch andere aussagekräftige Transmissions-Charakteristiken zur Materialanalyse heranziehen. Beispielsweise kann die Steigung einer erhaltenen Transmissionskennlinie an beliebigen charakteristischen Punkten ermittelt und mit abgespeicherten Referenzsteigungen verglichen werden. Falls ein entsprechender Algorithmus zum Auffinden geschaffen wird, können selbstverständlich auch andere spezielle Parameter der Transmissions-Kennlinie im UV-Wellenlängenbereich mit abgespeicherten Referenzparametern verglichen werden.

Das erfindungsgemäße Verfahren lässt sich natürlich auch mit bekannten Sortierverfahren zur Differenzierung von Keramik, Stein, Porzellan, Kunststoff oder anderer Feststoffe kombinieren und kann so zu einer Gliederung des inhomogenen Altglasmaterialstroms 6 in unterschiedliche, definierte Materialfraktionen dienen.

Zusätzlich kann auch vorgesehen sein, dass der Altglasmaterialstrom mit sichtbarem Licht bestrahlt wird und die Detektion des Sonderglases aufgrund eines Vergleiches der von der Detektiereinheit 8 detektierten Transmissionswerte des sichtbaren Lichtes des Altglasmaterialstroms 6 mit zuvor aus standardisierten Materialuntersuchungen erhaltenen Transmissionswerten des sichtbaren Lichtes erfolgt. Wie beispielsweise Fig.3 entnommen werden kann, weisen einige der Sondergläser ein charakteristisches Absorptions- bzw. Transmissionsverhalten auch im sichtbaren Bereich des Lichtes auf, das auf diese Art und Weise zur Klassifizierung ebenfalls genutzt werden kann.

## Patentansprüche

1. Verfahren zur Detektion und Sortierung von Glas innerhalb eines Altglasmaterialstroms (6), vorzugsweise aus Bruchglas, wobei von einer UV-Strahlungsquelle (7) emittierte Lichtstrahlen (14) auf dem Altglasmaterialstrom (6) auftreffen und optische Eigenschaften des Altglasmaterialstroms (6) mittels einer Detektiereinheit (8) ermittelt und von einer damit in Datenverbindung stehenden Auswerte- und Steuereinheit (10) verarbeitet werden und in Abhängigkeit davon die Auswerte- und Steuereinheit (10) eine stromabwärts der Detektiereinheit (8) angeordnete Entfernungsvorrichtung (11), beispielsweise Ausblasdüsen (11) aktiviert, welche im Altglasmaterialstrom (6) mitgeführte unerwünschte Materialien aus demselben ausscheidet und an einen vorbestimmten Ort ablenkt, wobei es sich bei den zu detektierenden, unerwünschten Materialien um Sonderglas, insbesondere Glaskeramik, Quarzglas, Bleiglas und temperatur- und hitzeschockbeständige technische Gläser wie Borosilikatgläser handelt, **dadurch gekennzeichnet, dass** die emittierten Lichtstrahlen (14) durch den Altglasmaterialstrom (6) hindurch auf der Detektiereinheit (8) auftreffen und die Detektion des Sonderglases aufgrund eines Vergleiches der UV-Transmissionswerte des Altglasmaterialstroms (6) mit zuvor aus standardisierten Materialuntersuchungen erhaltenen UV-Transmissionswerten erfolgt und zum Vergleich der UV-Transmissionswerte derjenige als UV-Absorptionskante bezeichnete Bereich von Transmissionswerten herangezogen wird, bei welchem mit abnehmender Wellenlänge keine zunehmende Transmission mehr auftritt.

2. Verfahren nach Anspruch 1, **dadurch gekennzeichnet, dass** das von der Strahlungsquelle (7) emittierte Licht den gesamten UV Wellenlängenbereich abdeckt.

3. Verfahren nach Anspruch 1 oder 2, **dadurch gekennzeichnet, dass** der Vergleich der von der Detektiereinheit (8) detektierten UV-Transmissionswerte des Altglasmaterialstroms (6) lediglich für ausgewählte Wellenlängenbereiche des UV-Spektrums erfolgt.

4. Verfahren nach Anspruch 1 oder 2, **dadurch gekennzeichnet, dass** der Vergleich der von der Detektiereinheit (8) detektierten UV-Transmissionswerte des Altglasmaterialstroms (6) für den gesamten Wellenlängenbereich des UV-Spektrums erfolgt.

5. Verfahren nach Anspruch 3 oder 4, **dadurch gekennzeichnet, dass** innerhalb der ausgewählten Wellenlängebereiche bzw. innerhalb des gesamten UV-Spektrums in regelmäßigen Abständen zueinander Meßpunkte zur Ermittlung der UV-Transmissionswerte vorgesehen sind.

6. Verfahren nach einem der Ansprüche 1 bis 6, **dadurch gekennzeichnet, dass** zum Vergleich der UV-Transmissionswerte derjenige Bereich der UV-Absorptionskante herangezogen wird, in welchem die Durchlässigkeit von Stückgut des Altglasmaterialstroms (6) 0 bis 50 % beträgt.

7. Verfahren nach einem der Ansprüche 1 bis 6, **dadurch gekennzeichnet, dass** zum Vergleich der UV-Transmissionswerte die Tangente der UV-Absorptionskanten ermittelt und deren Steigung mit abgespeicherten Referenzsteigungen verglichen wird.

8. Verfahren nach Anspruch 7, **dadurch gekennzeichnet, dass** der Schnittpunkt λ₀ der Tangente an die UV-Absorptionskante mit der Abszisse (Nullpunkt der Transmissions- bzw. Absorptionswerte) rechnerisch ermittelt und als Kennwert zum Vergleich der UV-Transmissionswerte herangezogen wird.

9. Verfahren nach einem der Ansprüche 1 bis 8, **dadurch gekennzeichnet, dass** der Altglasmaterialstrom zusätzlich mit sichtbarem Licht bestrahlt wird und die Detektion des Sonderglases aufgrund eines Vergleiches der von der Detektiereinheit (8) detektierten Transmissionswerte des sichtbaren Lichtes des Altglasmaterialstroms (6) mit zuvor aus standardisierten Materialuntersuchungen erhaltenen Transmissionswerten des sichtbaren Lichtes erfolgt.

10. Vorrichtung zur Detektion und Sortierung von Glas innerhalb eines Altglasmaterialstroms (6), vorzugsweise aus Bruchglas, wobei über eine Strahlungsquelle (7) emittierte UV-Lichtstrahlen (14) durch den Altglasmaterialstrom (6) hindurch auf einer Detektiereinheit (8) auftreffen und von dieser verarbeitet werden und in Abhängigkeit davon eine mit der Detektiereinheit (8) verbundene Auswerte- und Steuereinheit (10) eine stromabwärts der Detektiereinheit (8) angeordnete Entfernungsvorrichtung (11), beispielsweise Ausblasdüsen (11) aktiviert, welche im Altglasmaterialstrom (6) mitgeführte unerwünschte Materialien aus demselben ausscheidet und an einen vorbestimmten Ort ablenkt, wobei die Vorrichtung nach einem Verfahren gemäß einem der Ansprüche 1 bis 9 arbeitet.

## Claims

1. A method for detecting and sorting glass in a scrap glass stream (6), preferably a stream of broken glass, wherein light rays (14) emitted from a UV radiation source (7) impinge on said scrap glass stream (6) and optical properties of the scrap glass stream (6) are evaluated by a detector unit (8) and processed by an evaluation and control unit (10) in data communication therewith, said evaluation and control unit (10) activating, as a function thereof, a removal apparatus (11) such as blowing nozzles (11) disposed downstream of said detector unit (8), said removal apparatus singling out undesired matter entrained in said scrap glass stream (6) and diverting it to a predetermined location, wherein the unwanted materials to be detected are special glass, more specifically glass-ceramics, quartz glass, lead glass and temperature and heat-shock resistant technical glasses such as borosilicate glasses, **characterized in that** the emitted light rays (14) traverse the scrap glass stream (6) and impinge on the detector unit (8) and the special glass being detected comparing the UV transmission values of the scrap glass stream (6) with UV transmission values obtained before from standardized material inspections, the range of transmission values referred to as UV absorption edge being used to compare the UV transmission values being the one in which transmission no longer increases with decreasing wavelength.

2. The method as set forth in claim 1, **characterized in that** the light emitted from the radiation source (7) covers the entire UV wavelength range.

3. The method as set forth in claim 1 or 2, **characterized in that** the UV transmission values of the scrap glass stream (6) detected by the detector unit (8) are only compared in selected wavelength ranges of the UV spectrum.

4. The method as set forth in claim 1 or 2, **characterized in that** the UV transmission values of the scrap glass stream (6) detected by the detector unit (8) are compared in the entire wavelength range of the UV spectrum.

5. The method as set forth in claim 3 or 4, **characterized in that** equally spaced measurement points are provided within the selected wavelength ranges or within the entire UV spectrum for acquiring the UV transmission values.

6. The method as set forth in any one of the claims 1 through 5, **characterized in that** the range of the UV absorption edge used for comparing the UV transmission values is that range in which the permeability of the piece from the scrap glass stream (6) ranges from 0 to 50%.

7. The method as set forth in any one of the claims 1 through 6, **characterized in that**, for comparing the UV transmission values, the tangent of the UV absorption edges is determined and its gradient is compared with stored reference gradients.

8. The method as set forth in claim 7, **characterize in that** the intersection point λ₀ of the tangent to the UV absorption edge with the abscissa (zero point of the UV absorption or transmission values) is calculated and used as a characteristic value for comparing the UV transmission values.

9. The method as set forth in any one of the claims 1 through 8, **characterized in that** the scrap glass stream is additionally irradiated with visible light and that special glass detection occurs by comparing the transmission values of the visible light of the scrap glass stream (6) detected by the detector unit (8) with transmission values of the visible light obtained before from standardized material inspections.

10. An apparatus for detecting and sorting glass in a scrap glass stream (6), preferably a stream of broken glass, wherein UV light rays (14) emitted from a radiation source (7) traverse said scrap glass stream (6) and impinge on a detector unit (8) processing them, an evaluation and control unit (10) connected to said detector unit (8) activating, as a function thereof, a removal apparatus (11) such as blowing nozzles (11) disposed downstream of said detector unit (8), said removal apparatus singling out undesired matter entrained in said scrap glass stream (6) and diverting it to a predetermined location, wherein the apparatus works according to a method as set forth in any one of the claims 1 through 9.

## Revendications

1. Procédé de détection et de tri de verre à l'intérieur d'un flux de matériaux en verre usagé (6), de préférence en verre brisé, dans lequel des rayons lumineux (14) émis par une source de rayonnement UV (7) frappent le flux de matériaux en verre usagé (6) et des propriétés optiques du flux de matériaux en verre usagé (6) sont déterminées au moyen d'une unité de détection (8) et sont traitées par une unité d'évaluation et de commande (10) en liaison de données avec celle-ci, et en fonction de ceci, l'unité d'évaluation et de commande (10) active un dispositif d'extraction (11) disposé en aval de l'unité de détection (8), par exemple, des tuyères de soufflage (11), lequel dispositif d'extraction élimine du flux de matériaux en verre usagé (6) les matériaux non désirés entraînés dans celui-ci, et les détourne vers un lieu prédéfini, les matériaux non désirés à détecter consistant en du verre spécial, en particulier de la vitrocéramique, du verre quartzeux, du verre plombeux et des verres techniques résistants en température et résistant à des chocs thermiques tels que des verres de borosilicate, **caractérisé par le fait que** les rayons lumineux émis (14) frappent l'unité de détection (8) en traversant le flux de matériaux en verre usagé (6), et la détection du verre spécial est réalisée sur la base d'une comparaison des valeurs de transmission UV du flux de matériaux en verre usagé (6) avec des valeurs de transmission UV obtenues par des analyses standardisées de matériaux réalisées au préalable et, pour la comparaison des valeurs de transmission UV, on utilise la plage de valeurs de transmission désignée en tant que front d'absorption UV, à laquelle la transmission n'augmente pas lorsque les longueurs d'onde diminuent.

2. Procédé selon la revendication 1, **caractérisé par le fait que** la lumière émise par la source de rayonnement (7) couvre la totalité de la plage de longueurs d'onde UV.

3. Procédé selon l'une des revendications 1 ou 2, **caractérisé par le fait que** la comparaison des valeurs de transmission UV du flux de matériaux en verre usagé (6) détectées par l'unité de détection (8) est réalisée uniquement pour des plages de longueurs d'onde choisies du spectre UV.

4. Procédé selon l'une des revendications 1 ou 2, **caractérisé par le fait que** la comparaison des valeurs de transmission UV du flux de matériaux en verre usagé (6) détectées par l'unité de détection (8) est réalisée pour la totalité de la plage de longueurs d'onde du spectre UV.

5. Procédé selon l'une des revendications 3 ou 4, **caractérisé par le fait qu**'à l'intérieur des plages de longueurs d'onde choisies ou à l'intérieur de la totalité du spectre UV sont prévus, à intervalles réguliers les uns des autres, des points de mesure pour déterminer les valeurs de transmission UV.

6. Procédé selon l'une des revendications 1 à 6, **caractérisé par le fait que**, pour la comparaison des valeurs de transmission UV, on utilise la plage du front d'absorption UV dans laquelle la transmittance d'un objet unitaire du flux de matériaux en verre usagé (6) vaut de 0 à 50 %.

7. Procédé selon l'une des revendications 1 à 6, **caractérisé par le fait que**, pour la comparaison des valeurs de transmission UV, on détermine la tangente des fronts d'absorption UV et on compare leur pente à des pentes de référence sauvegardées.

8. Procédé selon la revendication 7, **caractérisé par le fait que** le point d'intersection λ₀ de la tangente au front d'absorption UV avec l'abscisse (point nul des valeurs de transmission ou d'absorption) est déterminé par voie de calcul et est utilisé en tant que valeur connue pour la comparaison des valeurs de transmission UV.

9. Procédé selon l'une des revendications 1 à 8, **caractérisé par le fait que** le flux de matériaux en verre usagé est illuminé en outre par de la lumière visible, et la détection du verre spécial est réalisée sur la base d'une comparaison des valeurs de transmission de la lumière visible du flux de matériaux en verre usagé (6) détectées par l'unité de détection (8) avec des valeurs de transmission de la lumière visible obtenues par des analyses standardisées de matériau réalisées au préalable.

10. Dispositif de détection et de tri de verre à l'intérieur d'un flux de matériaux en verre usagé (6), de préférence en verre brisé, dans lequel des rayons lumineux UV (14) émis par une source de rayonnement (7) frappent une unité de détection (8) en traversant le flux de matériaux en verre usagé (6), et sont traités par celle-ci, et en fonction de ceci, une unité d'évaluation et de commande (10) reliée à l'unité de détection (8) active un dispositif d'extraction (11) disposé en aval de l'unité de détection (8), par exemple des tuyères de soufflage (11), lequel dispositif d'extraction élimine du flux de matériaux en verre usagé (6) les matériaux non désirés entraînés dans celui-ci, et les détourne vers un lieu prédéfini, le dispositif fonctionnant selon un procédé tel que défini à l'une des revendications 1 à 9.
